# EUROPÄISCHE PATENTSCHRIFT

(11) **EP 3 543 551 B1**
(45) Veröffentlichungstag und Bekanntmachung des Hinweises auf die Patenterteilung: **09.03.2022**
(21) Anmeldenummer: 18162736.5
(22) Anmeldetag: 20.03.2018
(51) Int. Cl.: F16B 25/00, F16B 25/10

(54) **ABSTANDSBEFESTIGER ZUR BEFESTIGUNG EINES RAHMENS IN EINER LAIBUNG**
SEPARATOR FOR FASTENING A FRAME IN A SOFFIT
ÉLÉMENT DE FIXATION D'ESPACE DESTINÉ À FIXER UN CADRE DANS UN INTRADOS

(43) Veröffentlichungstag der Anmeldung: 25.09.2019
(73) Patentinhaber: SFS Intec Holding AG, 9435 Heerbrugg (CH)
(72) Erfinder: SIEBER, Dominik, 9443 Widnau (CH); HAAS, Marco, 88131 Bodolz (DE)

(56) Entgegenhaltungen:
- EP-A1- 0 284 894
- DE-U1- 9 317 008
- DE-U1-202011 004 144
- DE-U1-202012 101 482
- US-A1- 2008 124 188
- US-A1- 2015 316 088
- US-B1- 6 250 866

## Beschreibung

### TECHNISCHER HINTERGRUND

Bei modernen mehrschaligen Gebäudehüllen ist die sachgerechte Installation von Fenster- und Türrahmen eine wichtige Aufgabe, insbesondere weil eine moderne Gebäudehülle aus einer Vielzahl funktioneller Materialien unterschiedlicher Dicke, Festigkeit und Belastbarkeit besteht.

Ein besonders im Bereich des energiesparenden Bauens bekanntes Material ist Porenbeton. Porenbeton oder auch Gasbeton ist ein leichter, hochporöser, mineralischer Baustoff auf der Grundlage von Kalk-, Kalkzement- oder Zementmörtel, der durch Blähen porosiert und einer Dampfhärtung unterzogen wird. Die Verarbeitung am Bau kann im Dünnbettverfahren erfolgen und eventuell notwendiger Zuschnitt kann präzise mit Hilfe von Sägen vollzogen werden. Porenbeton wird in verschiedenen Steindruckfestigkeitsklassen hergestellt und mit PP2 bis PP8 bezeichnet.

Da moderne Fenster/Türen häufig grossflächig und mit Mehrfachverglasung versehen sind, weisen sie ein hohes Gewicht auf, was in Kombination mit den auftretenden Einwirkungen (Winddruck, Windsog, Nutzlast) eine Herausforderung speziell für die Verankerung in Mauerwerk aus Porenbeton darstellt. Dies gilt bereits unter Standartbedingungen, insbesondere aber bei erhöhten Anforderungen wie z.B. Einbruchhemmung.

### STAND DER TECHNIK

Abstandsbefestiger oder Abstandsmontageschrauben für Porenbeton gemäss Stand der Technik sind beispielsweise in den Dimensionen 7.5mm oder 11,5 mm mit verschiedenen Längen bis üblicherweise 250mm kommerziell erhältlich. Der zu verankernde Fensterrahmen erhält eine Montagevorbohrung von 6mm bzw. 10mm Durchmesser, dadurch kann vor Ort die Abstandsmontageschraube ohne Vorbohren direkt in den Porenbeton eingebracht werden. Ein Abstand zwischen zwei Befestigungspunkten muss dabei häufig unter 300mm liegen.

Die Schrift DE 20 2012 101 482 U1 zeigt eine Zementschraube bzw. Bohrschraube zum Einsenken in ein vorgebohrtes Loch in Beton oder Stein. Ein Gewinde ist in Nähe der Schraubenspitze mit einer gezahnten Schneidkante versehen.

Das Dokument EP 0 284 894 beschreibt eine Universalschraube, die in praktisch allen Materialien verwendet werden kann und auf Dübel verzichtet. Besonderer Augenmerk wird auf die Verwendung mit einem Impulswerkzeug, also einem Schlagschrauber gelegt. Die Schlagimpulse sollen insbesondere tangential zum Gewinde verlaufen, um den Einschraubvorgang zu unterstützen.

### NACHTEILE DES STANDES DER TECHNIK

Schrauben des Standes der Technik haben, insbesondere beim Durchmesser 7.5mm eine begrenzte Tragfähigkeit. Eine Schraube mit Durchmesser 11.5mm erfordert eine grössere, Nicht-Standard Vorbohrung im Rahmen, was je nach Rahmenbauweise aus Platzgründen problematisch sein kann. Zudem erfordern solche Schrauben einen grösseren Materialeinsatz und sind aufwändiger in der Herstellung. Die Aufgabe der Erfindung besteht darin, diese Nachteile des Standes der Technik zu vermeiden und eine Schraube anzugeben, deren Dimensionierung einen verbesserten Einsatz in Porenbeton erlaubt.

### BESCHREIBUNG DER ERFINDUNG

Diese Aufgabe wird erfüllt von einem Abstandsbefestiger bzw. einer Abstandsmontageschraube 10 mit den Merkmalen von Anspruch 1. Die Unteransprüche beschreiben weitere nützliche Varianten und Ausführungsformen. Anspruch 7 bezieht sich auf eine Verwendung der Schraube.

Im Grundsatz lassen sich bei einer Abstandsmontageschraube 10 für Porenbeton als wichtige Bestandteile unterscheiden: Ein Kopf 12, der üblicherweise einen Kraftangriff aufweist und an den sich ein Schaft 14 bzw. Schaftabschnitt anschliesst, der zumindest abschnittsweise ein Gewinde 15 trägt. Abschnittsweise heisst hierbei, dass der Schaft durchaus auch gewindefreie Abschnitte aufweisen kann, sofern das technisch notwendig oder sinnvoll ist. Der Schaft kann auch mehrere Gewindeabschnitte aufweisen. An den Schaftabschnitt schliesst sich ein Spitzenbereich 16 an.

Der Abstandsbefestiger gemäss der vorliegenden Erfindung ist für eine Anwendung in Porenbeton ausgelegt durch die Kombination der folgenden Merkmale: Das Gewinde weist eine Steigung von 3mm bis 5mm auf und bietet gegenüber Schrauben mit grösseren Steigungen den Vorteil, mehr Gewindeflankenfläche pro Längeneinheit der Schraube zur Verfügung zu stellen. Ein nicht-mehrgängiges Gewinde ist von Vorteil, weil in den Gewindefurchen somit Stege des porigen Verankerungsmaterials sich bilden können, was ebenfalls die Verankerung verbessert.

Vielfach werden bei Abstandsbefestigern im Spitzenbereich Verdrängungsspitzen eingesetzt, sprich spitzkonische Ausführungen der Spitze, die das Porenbeton-Material durch Verdrängung verdichten. Es hat sich gezeigt, dass erfindungsgemäss eine Bohrspitze 17 besser geeignet ist. Eine Bohrspitze ist in üblicher Definition eine Spitze mit angeformten Schneiden, die das Material beim Eindrehen abtragen. Der Aussendurchmesser D_{A} der Abstandsmontageschraube 10, in üblicher Definition gemessen über das Gewinde 15 im Schaftbereich 14 beträgt zwischen 7.5mm und 11.5mm, bevorzugt zwischen 8.5mm bis 9mm. Die Gesamtlänge der Schraube, gemessen also vom Kopf 12 (incl.) bis und mit dem Spitzenbereich 16, beträgt mindestens 150mm und höchstens 350mm. Geringere Längen ergeben keine gute Verankerung im Porenbeton, grössere Längen sind problematisch bei der Montage. Besonders geeignet haben sich Gesamtlängen zwischen 240 und 300mm (jeweils einschliesslich) herausgestellt.

Die erfindungsgemässe Geometrie resultiert damit in einer Schraube mit einem hohen Gewindeüberdeckungsverhältnis, das heisst entgegen üblicher Auslegung mit hohen Gewindezügen. Dies verbessert deutlich das Einfurchen der Schraube im Porenbeton und hat den weiteren Vorteil, dass selbst eine Schraube mit Aussendurchmesser D_{A} = 9mm sich in einer Standard-Rahmenvorbohrung von 6mm verschrauben lässt (solange der Kerndurchmesser DK < 6mm).

Weiter weist die Erfindung das Merkmal auf, dass der Durchmesser der Bohrspitze 17 D_{BS} mindestens 0.5mm, bevorzugt mindestens 1mm und höchstens 2mm geringer ist als der Kerndurchmesser D_{K} im Bereich des Gewindes 15. Mit anderen Worten, die Bohrspitze ist immer geringfügig kleiner im Durchmesser als der Kern der Abstandsmontageschraube 10. Das bewirkt, dass die Bohrspitze 17 zwar einen Kanal für den Abstandsbefestiger 10 schafft, gleichzeitig jedoch neben dem Einfurchen des Gewindes 15 in den Porenbeton eine, wenn auch im Vergleich zu einer reinen Verdrängerspitze geringere, Verdichtung des Porenbetons stattfindet. Durch diese geometrische Auslegung wird im Spitzenbereich 16 ein im Wesentlichen konusförmiger Übergangsbereich 18 zwischen dem Schaft 14 (mit Kerndurchmesser D_{K} ) und der Bohrspitze 17 (mit Durchmesser D_{BS} ) geschaffen.

Erfindungsgemäß wird eine Abstandsmontageschraube 10 im Schaft(bereich) 14 einen Kerndurchmesser D_{K} zwischen 5mm und 7mm aufweisen, besonders bevorzugt sogar zwischen 5.5mm bis 6mm.

In einer besonders bevorzugten Ausführungsform ist die Rundlaufgenauigkeit einer Abstandsmontageschraube 10 gemäss vorliegender Erfindung geringer (besser) ist als +/-0.5%, bevorzugt geringer (besser) als +/- 0.3%. Mit anderen Worten, auf eine Messlänge am Schaft von mindestens 60% der Schraubenlänge beträgt die maximale seitliche Ablenkung, bezogen auf eben jene Messlänge nicht mehr als 0.5%, bevorzugt weniger als 0.3% in Plus/Minustoleranz. Es hat sich gezeigt, dass Schrauben mit schlechterer Rundlaufgenauigkeit beim Eindrehen etwas taumeln, was zu einer Vorschädigung des Porenbeton-Materials führt und im Endzustand zu schlechteren Auszugs- und Querlastwerten.

Beim Eindrehen der Schraube ist es hilfreich, wenn das Gewinde 15 vom Schaft 14 bis in den Konusbereich 18 reicht.

Die oben beschriebene Abstandsmontageschraube 10 ist besonders geeignet zur beabstandeten Montage eines Rahmenbauteils in Laibungen aus Porenbeton. Üblicherweise werden solche Rahmenbauteile in der Laibung einer Gebäudeöffnung montiert, die in einer Gebäudemauer vorgesehen ist. Für die erfindungsgemässe Verwendung wird die Gebäudemauer zumindest im Bereich der Laibung Porenbeton aufweisen und die Abstandsmontageschraube 10 durch das Rahmenbauteil im Porenbeton verankert werden. In erfinderischer Verwendung wird die Abstandsmontageschraube ohne Vorbohren der Laibung in den Porenbeton eingedreht. Ein mechanischer Dübel oder chemische Verankerungshilfen (Klebstoffe, Epoxydharze, Schnellzemente) brauchen nicht verwendet zu werden, was die Montage auf der Baustelle bedeutend vereinfacht.

Als Ausgangsmaterial für eine Abstandsmontageschraube 10 wird üblicherweise Stahl verwendet. Die Herstellung kann durch Kaltumformung (Kopf, Spitzenbereich) und Gewinderollen /-walzen erfolgen. Eine abschliessende Oberflächenbehandlung wie Korrosionshemmung, farbliche Kennzeichnung kann je nach Anforderung wie im Stand der Technik bekannt, ausgeführt werden. Das Setzen einer Abstandsmontageschraube 10 kann mit Setzgeräten der bekannten Art, wie Akkuschraubern etc. erfolgen, die über einen passenden Kraftangriff verfügen.

Bekannterweise können Rahmenbauteile bereits mit Vorbohrungen in der vorgeschriebenen Anzahl und Anordnung im Rahmen an den Montageort geliefert werden, was eine mögliche Fehlerquelle vermeidet. Die Vorbohrungen sind üblicherweise so dimensioniert, dass eine Abstandsmontageschraube mit nur geringem Widerstand sich in den Rahmen bzw. dessen tragenden kern einformen kann. Die erfinderische Abstandsmontageschraube 10 kann sich selbst in die Laibung aus Porenbeton einbohren und mittels des Gewindes so in der Gebäudemauer verankern, dass eine sehr viel besserer Halt (Lastabtrag) pro Verankerungspunkt erzielt wird als bei Schrauben im Stand der Technik.

### BESCHREIBUNG DER FIGUR

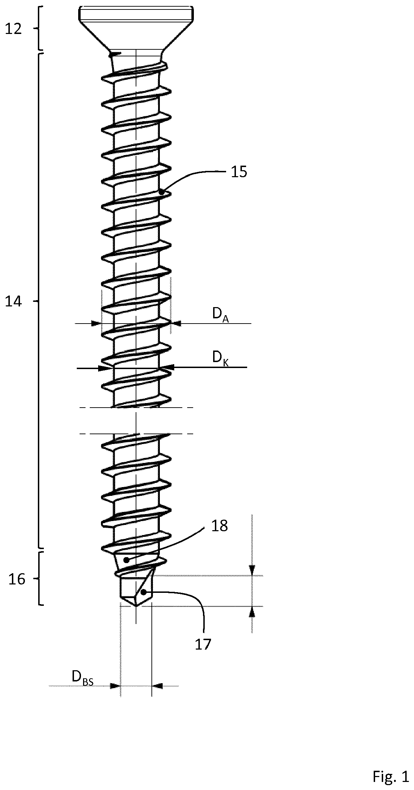

Die Figur 1 zeigt eine Abstandsmontageschraube 10 gemäss der Erfindung. Die Schraube 10 umfasst, in dieser technischen Abfolge, einen Kopf 12 (üblicherweise mit einem - hier nicht gezeigten - Kraftangriff), an den ein Schaft oder Schaftabschnitt 14 anschliesst. Der Schaft weist wenigstens abschnittsweise ein Gewinde 15 auf, welches, wie gezeigt, den Aussendurchmesser D_{A} aufweist. Der Kerndurchmesser D_{K} wird im Gewindegrund gemessen. Der Kopf 12 ist in Figur 1 als Senkkopf dargestellt, das ist jedoch nicht einschränkend zu verstehen oder erfindungsrelevant. Die Kopfform kann auch als Linse oder generell als abdeckender Kopf ausgeführt werden, ohne dass der erfinderische Kern betroffen wird.

An den Schaftabschnitt 14 schliesst ein Spitzenbereich 16 an, der wiederum einen Konusbereich 18 als Übergang vom Schaft 14 zu einer Bohrspitze 17 aufweist. Die Bohrspitze hat einen Durchmesser D_{BS}, der geringer als der Kerndurchmesser D_{K} ist.

### BEZUGSZEICHENLISTE:

- 10: Abstandsbefestiger, Abstandsmontageschraube, Schraube
- 12: Kopf (der Schraube 10)
- 14: Schaft (der Schraube 10), Schaftabschnitt, Schaftbereich
- 15: Gewinde
- 16: Spitzenbereich (der Schraube 10)
- 17: Bohrspitze
- 18: Konusbereich

## Patentansprüche

1. Abstandsmontageschraube (10) für Porenbeton mit einem Kopf (12), einem Schaft (14) und einem Spitzenbereich (16), wobei der Schaft (14) zumindest abschnittsweise ein Gewinde (15) trägt, **dadurch gekennzeichnet, dass**
- das nicht-mehrgängige Gewinde (15) eine Steigung zwischen 3mm und 5mm aufweist und
- der Spitzenbereich (16) eine Bohrspitze (17) aufweist und
- der Aussendurchmesser D_{A} zwischen 7.5mm und 11.5mm beträgt und
- der Schaft (14) einen Kerndurchmesser D_{K} zwischen 5mm und 7mm aufweist
- die Gesamtlänge der Schraube mindestens 150mm und höchstens 350mm beträgt;
- der Durchmesser der Bohrspitze (17) D_{BS} mindestens 0.5mm, bevorzugt mindestens 1mm und höchstens 2mm geringer ist als der Kerndurchmesser D_{K} im Bereich des Gewindes (15);
- der Spitzenbereich (16) einen im wesentlichen konusförmigen Übergangsbereich (18) zwischen dem Schaft (14) mit Kerndurchmesser D_{K} und der Bohrspitze (17) mit Durchmesser D_{BS} aufweist.

2. Abstandsmontageschraube (10) nach Anspruch 1, **dadurch gekennzeichnet, dass** das Gewinde (15) einen Aussendurchmesser D_{A} zwischen 8.5mm bis 9mm aufweist.

3. Abstandsmontageschraube (10) nach Anspruch 1-2, **dadurch gekennzeichnet, dass** der Schaft (14) einen Kerndurchmesser D_{K} zwischen 5.5mm bis 6mm aufweist.

4. Abstandsmontageschraube (10) nach Anspruch 1-2, **dadurch gekennzeichnet, dass** die Gesamtlänge der Schraube zwischen 250 und 300mm (jeweils einschliesslich) liegt.

5. Abstandsmontageschraube (10) nach Anspruch 1-4, **dadurch gekennzeichnet, dass** das Gewinde (15) vom Schaft bis in den Konusbereich (18) reicht.

6. Abstandsmontageschraube (10) nach Anspruch 1-5, **dadurch gekennzeichnet, dass** die Rundlaufgenauigkeit der Schraube geringer ist als +/- 0.5%, bevorzugt geringer als +/- 0.3%

7. Verwendung einer Abstandsmontageschraube (10) nach Anspruch 1-6 zur beabstandeten Montage eines Rahmenbauteils in der Laibung einer Gebäudeöffnung in einer Gebäudemauer, wobei die Gebäudemauer zumindest im Bereich der Laibung Porenbeton aufweist und die Abstandsmontageschraube (10) durch das Rahmenbauteil im Porenbeton verankert wird, **dadurch gekennzeichnet, dass** die Abstandsmontageschraube ohne Vorbohren der Laibung in den Porenbeton eingedreht wird und kein mechanischer Dübel oder chemische Verankerungshilfen Verwendung finden.

## Claims

1. A spacing mounting screw (10) for aerated concrete, having a head (12), a shank (14) and a tip region (16), the shank (14) carrying a thread (15) at least in sections, **characterized in that**
- the non-multi-start thread (15) has a pitch between 3 mm and 5 mm and
- the tip region (16) has a drill tip (17) and
- the outer diameter D_{A} is between 7.5 mm and 11.5 mm and
- the shank (14) has a core diameter D_{K} between 5 mm and 7 mm,
- the total length of the screw is at least 150 mm and at most 350 mm;
- the diameter of the drill tip (17) D_{BS} is at least 0.5 mm, preferably at least 1 mm and at most 2 mm smaller than the core diameter D_{K} in the region of the thread (15);
- the tip region (16) has a substantially conical transition region (18) between the shank (14) having the core diameter D_{K} and the drill tip (17) having the diameter D_{BS}.

2. The spacing mounting screw (10) according to claim 1, **characterized in that** the thread (15) has an outer diameter D_{A} between 8.5 mm and 9 mm.

3. The spacing mounting screw (10) according to claims 1-2, **characterized in that** the shank (14) has a core diameter D_{K} between 5.5 mm and 6 mm.

4. The spacing mounting screw (10) according to claims 1-2, **characterized in that** the total length of the screw is between 250 and 300 mm (inclusive in each case).

5. The spacing mounting screw (10) according to claims 1-4, **characterized in that** the thread (15) extends from the shank into the cone region (18).

6. The spacing mounting screw (10) according to claims 1-5, **characterized in that** the concentricity of the screw is less than +/- 0.5%, preferably less than +/- 0.3%.

7. A use of a spacing mounting screw (10) according to claims 1-6 for spaced mounting of a frame component in the jamb of a building opening in a building wall, the building wall having aerated concrete at least in the region of the jamb and the spacing mounting screw (10) being anchored in the aerated concrete by the frame component, **characterized in that**
the spacing mounting screw is screwed into the aerated concrete without predrilling the jamb and no mechanical dowel or chemical anchoring aids are used.

## Revendications

1. Vis d'espacement de montage (10) pour du béton poreux avec une tête (12), une tige (14) et une zone de pointe (16), sachant que la tige (14) porte au moins par endroits un filetage (15), **caractérisée en ce que**
- le filetage non-multiple (15) comporte un pas se situant entre 3 mm et 5 mm et
- la zone de pointe (16) comporte une pointe de perçage (17) et
- le diamètre extérieur D_{A} se situe entre 7,5 mm et 11,5 mm et
- la tige (14) comporte un diamètre à fond de filet D_{K} se situant entre 5 mm et 7 mm,
- la longueur totale de la vis est au moins de 150 mm et au maximum de 350 mm,
- le diamètre de la pointe de perçage (17) D_{BS} est au moins de 0,5 mm, de préférence au moins de 1 mm et au maximum de 2 mm inférieur au diamètre à fond de filet D_{K} dans la zone du filetage (15),
- la zone de pointe (16) comporte une zone de transition pour l'essentiel conique (18) entre la tige (14) avec le diamètre à fond de filet D_{K} et la pointe de perçage (17) avec un diamètre D_{BS}.

2. Vis d'espacement de montage (10) selon la revendication 1, **caractérisée en ce que** le filetage (15) comporte un diamètre extérieur D_{A} entre 8,5 mm à 9 mm.

3. Vis d'espacement de montage (10) selon les revendications 1-2, **caractérisée en ce que** la tige (14) comporte un diamètre à fond de filet D_{K} allant 5,5 mm à 6 mm.

4. Vis d'espacement de montage (10) selon les revendications 1-2, **caractérisée en ce que** la longueur totale de la vis se situe entre 250 et 300 mm (y compris).

5. Vis d'espacement de montage (10) selon les revendications 1-4, **caractérisée en ce que** le filetage (15) va de la tige jusque dans la zone conique (18).

6. Vis d'espacement de montage (10) selon les revendications 1-5, **caractérisée en ce que** la précision de rotation de la vis est inférieure à +/- 0,5 %, de préférence inférieure à +/- 0,3 %.

7. Utilisation d'une vis d'espacement de montage (10) selon les revendications 1-6 pour le montage espacé d'un composant de cadre dans l'embrasure d'une ouverture de bâtiment dans un mur de bâtiment, sachant que le mur de bâtiment comporte, au moins dans la zone de l'embrasure, du béton poreux et la vis d'espacement de montage (10) est ancrée à travers le composant de cadre dans le béton poreux, **caractérisée en ce que** la vis d'espacement de montage est vissée dans le béton poreux sans préperçage de l'embrasure et **en ce que** l'on n'utilise aucun goujon mécanique ou moyens auxiliaires d'ancrage chimiques.
